# EUROPÄISCHE PATENTSCHRIFT

(11) **EP 0 706 631 B1**
(45) Veröffentlichungstag und Bekanntmachung des Hinweises auf die Patenterteilung: **06.03.2002**
(21) Anmeldenummer: 94916145.9
(22) Anmeldetag: 01.06.1994
(51) Int. Cl.: F24J 2/38

(54) **SONNENNACHFÜHRUNG**
SUN-FOLLOWING DEVICE
SYSTEME DE POURSUITE DU SOLEIL

(30) Priorität: 01.06.1993 DE 4318103; 07.12.1993 DE 4341630; 02.03.1994 DE 4406765
(43) Veröffentlichungstag der Anmeldung: 17.04.1996
(73) Patentinhaber: BERGER, Alexander, D-76139 Karlsruhe 1 (DE)
(72) Erfinder: BERGER, Alexander, D-76139 Karlsruhe 1 (DE)
(86) Internationale Anmeldenummer: DE9400612
(87) Internationale Veröffentlichungsnummer: WO9428360

(56) Entgegenhaltungen:
- EP-A- 0 164 066
- WO-A-93/11392
- DE-A- 2 715 334

## Beschreibung

Die Erfindung bezieht sich auf eine Einheit bestehend aus zwei einachsigen Sonnennachführungen, d. h. eine Vorrichtung, welche eine Solarmontierung in Abhängigkeit von der Sonnenposition bewegt.

Es sind Systeme mit mehreren Sonnennachführungen (Nachführungen) bekannt, (vgl. WO-A-93-11392), deren hydraulische Stellglieder von einer gemeinsamen Druckquelle angetrieben werden. Dabei muß jede Nachführung separat gesteuert werden, was nur mit einer aufwendigen Steuerung realisierbar ist. Des weiteren ist der Energieverbrauch durch ein solches System groß (vgl. DE 2715334). Es sind auch hydraulische Nachführungen mit einem Gegengewicht bekannt, das beim Absinken der Solarmontierung Energie zur Wiederverwendung beim Anheben speichert. Dieses Gegengewicht ermöglicht zwar einen sehr sparsamen Antrieb, verursacht jedoch zusätzliche Herstellungskosten.

Die Aufgabe der Erfindung besteht darin, die vorgenannten Probleme zu eliminieren.

Diese Aufgabe, eine einfache Steuerung für Systeme aus mehreren Nachführungen bereitzustellen, wird durch eine Einheit entsprechend den Merkmalen des Patentanspruchs 1 gelöst. Es ist somit ausreichend, nur eine Solarmontierung dem Sonnenstand entsprechend zu bewegen, damit sich die andere Solarmontierung auch dem Sonnenstand entsprechend bewegt, und dies ohne zusätzliche Steuerung, wobei diese zwei Nachführungen Bestandteile in einem System von mehreren Nachführungen sein können. Wird die Solarmontierung und/oder Teile mit einer veränderlichen Höhenlage einer von diesen Nachführungen als energiespeicherndes Gegengewicht für die andere benutzt, so ergibt sich ein System aus zwei Nachführungen mit äußerst geringem Energieverbrauch, was insbesondere bei schweren Solarmontierungen zu erheblichen Systemvorteilen führt. Unter Solarmontierung wird ein jedes Objekt verstanden, welches ein Zusammenhang mit Sonnenlicht hat und ggf. eine Vorrichtung für zusätzliche Nachführbewegung beinhalten kann.

Besondere Ausführungen sind Gegenstand der Unteransprüche. Die Erfindung wird anhand der Zeichnungen näher erläutert. Es zeigen:
- Fig. 1: Einheiten aus zwei einachsigen Sonnennachführungen
- Fig. 2: Anlagen aus mehreren Einheiten

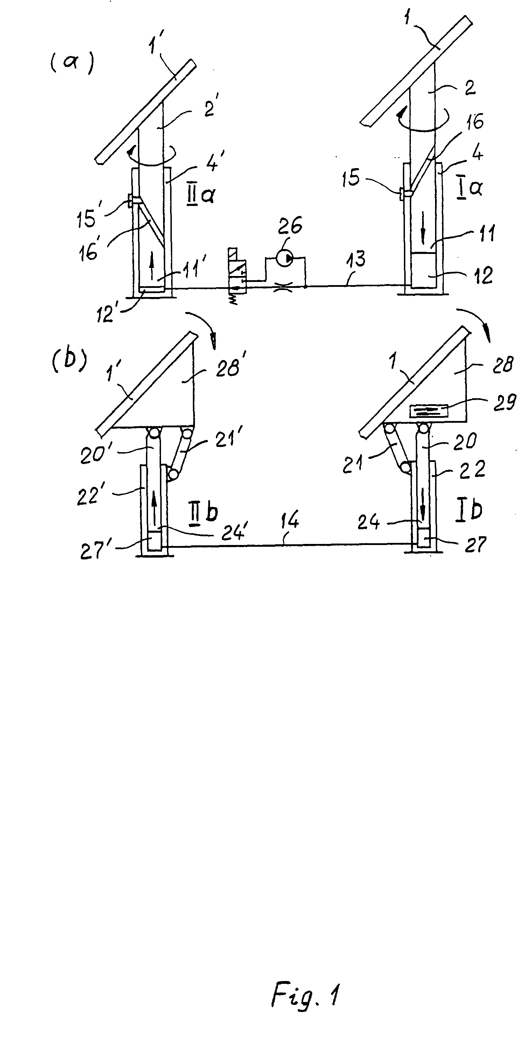

Fig. 1a, 1b zeigen jeweils eine Nachführung (Ia, Ib), welche einen in einem Führungsrohr (4, 22) gleitenden Mast (2, 20) aufweist, der oben eine Solarmontierung (1) trägt, unten von einem einfachwirkenden Zylinder (12, 27) getragen wird, und mit einem als Energiespeicher wirkenden Gegengewicht nach Art einer hydraulischen Waage durch eine hydraulische Kraftübertragung, bestehend aus einem einfachwirkenden Zylinder (12, 27), einer hydraulischen Leitung (13, 14) und einem zweiten einfachwirkenden Zylinder (12', 27') gekoppelt ist, wobei statt der hydraulischen eine mechanische Kraftübertragung auch sinnvoll wäre. Als Gegengewicht dienen die Solarmontierung und Teile mit einer veränderlichen Höhenlage einer zweiten, jeweils baugleichen Nachführung (IIa, IIb). Die Nachführungen sind derart miteinander gekoppelt, daß wenn der Mast (2, 2', 20, 20') einer der beiden Nachführungen sich im Senkvorgang befindet, sich der andere gleichzeitig hebt, wobei die Drehrichtungen beider Solarmontierungen übereinstimmen. Eine gleichsinnige Drehung wird bei Nachführungen mit einer vorzugsweise senkrechten Drehachse gemäß Fig.la durch zueinander entgegengerichtet gewendelte Führungen (16 und 16') mit Bolzen (15, 15') erreicht, welche eine lineare Bewegung der Masten in eine entsprechende Drehung umwandeln. Bei Nachführungen mit einer vorzugsweise waagerechten Drehachse gemäß Fig.1b wird eine gleichsinnige Drehung durch Stangen (21, 21') bewirkt, die einerseits an tragenden Konstruktionen (28, 28') der Solarmontierungen über jeweils ein Drehgelenk angekoppelt sind, und zwar an verschiedenen Seiten der Koppelpunkten, die die Masten (20, 20') mit den entsprechenden Konstruktionen (28, 28') verbinden. Andererseits sind die Stangen (21, 21') schwenkbar mit dem Führungsrohr (22, 22') oder einem anderen Fixpunkt verbunden. Als Ausführungsvariante werden die Stangen (21, 21') unbeweglich und die Führungsrohre (22, 22') schwenkbar am Boden befestigt; oder es ist zwischen dem Mast (20, 20') und der Konstruktion (28, 28') jeweils eine zusätzliche schwenkbare Stange angeordnet, wobei die Führungsrohre (22, 22') und die Stangen (21, 21') unbeweglich sind. Die Bewegung beider Solarmontierungen in eine Richtung (z.B. Tagsüber) erfolgt, weil die Solarmontierung und Teile mit veränderlicher Höhenlage einer Nachführung (Ia) (Fig.1a) etwas schwerer sind als die der anderen (IIa); die Bewegung beider Solarmontierungen in andere Richtung (z.B. nachts) wird beispielsweise von einer Pumpe (26) bewirkt. Die Steuerung nach Fig.1b erfolgt durch Verschiebung eines Gewichtes (29).

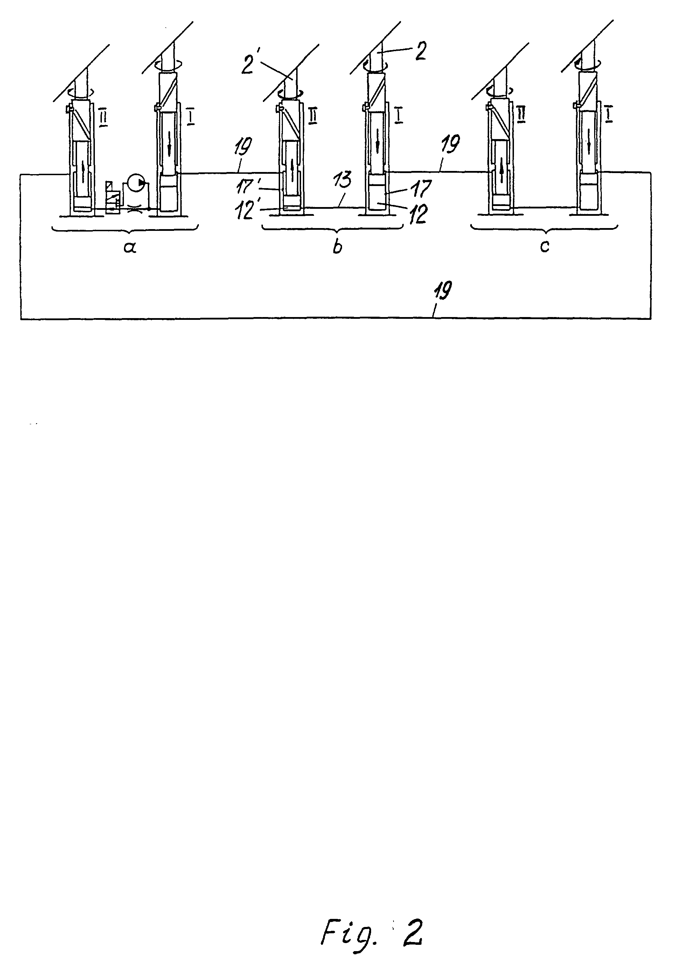

Fig. 2a zeigt eine Anlage aus drei Einheiten (a, b, c), wobei jede Einheit zwei Nachführungen gemäß Fig. 1a oder Fig. 1b umfaßt. Die Masten (2, 2'), werden hier von doppeltwirkenden Zylindern (17, 17') getragen. Die Einheiten (a, b, c) sind miteinander über die oberen Kammern der doppeltwirkenden Zylinder gekoppelt, wobei jeweils eine obere Kammer der Nachführung (I) einer Einheit mit nur einer oberen Kammer der Nachführung (II) einer anderen Einheit über eine hydraulische Leitung (19) in Verbindung steht. Somit ist es notwendig, nur eine Nachführung zu steuern, alle anderen bewegen sich dabei zwangsläufig richtig. Im allgemeinen ist das Gesamtgewicht der beweglichen Teile aller Nachführungen (I) größer, als das aller Nachführungen (II).

## Patentansprüche

1. Einheit bestehend aus zwei einachsigen Sonnennachführungen, mit daran angeordneten Solarmontierungen, wobei die Sonnennachführungen die Solarmontierungen (1, 1') in Abhängigkeit von der Sonnenposition bewegen, wobei die beiden Sonnennachführungen über eine hydraulische oder pneumatische Kraftübertragung (13, 14) unmittelbar derart miteinander gekoppelt sind, daß, wenn eine Solarmontierung (1) in eine, der Sonnenposition entsprechende Richtung bewegt wird, die andere Solarmontierung (1') ebenfalls eine Bewegung in die, der Sonnenposition entsprechenden Richtung ausführt.

2. Einheit nach Anspruch 1, **dadurch gekennzeichnet, daß** Stellglieder (2, 2') der beiden Nachführungen relativ zueinander eine exakt oder annähernd entgegengerichtete lineare Bewegung ausführen.

3. Einheit nach Anspruch 1, **dadurch gekennzeichnet, daß** Stellglieder der beiden Nachführungen relativ zueinander eine exakt oder annähernd gleichgerichtete lineare Bewegung ausführen.

4. Einheit nach Anspruch 2, **dadurch gekennzeichnet, daß** zur gleichsinnigen Drehung der Solarmontierungen entgegengerichtet gewendelte Führungen (16, 16') vorgesehen sind.

5. Einheit nach Anspruch 3, **dadurch gekennzeichnet, daß** zur gleichsinnigen Drehung der Solarmontierungen gleichgerichtet gewendelte Führungen vorgesehen sind.

6. Einheit nach einem der Ansprüche 1, 2 oder 3, **dadurch gekennzeichnet, daß** die Solarmontierungen mittels Stangen (21, 21') gedreht werden, wobei die Stangen der beiden Nachführungen jeweils so angekoppelt sind, dass die Drehrichtungen der Solarmontierungen (1, 1') übereinstimmen.

7. Einheit nach einem der Ansprüche 1, 2, 4 oder 6, **dadurch gekennzeichnet, daß** einer Nachführung ein Gegengewicht zugeordnet ist, das beim Absinken der Solarmontierung (1) und/oder Teilen der Nachführung mit einer veränderlichen Höhenlage Energie zur Wiederverwendung beim Anheben speichert, wobei das Gegengewicht durch die Solarmontierung (1') und/oder Teile der Nachführung mit einer veränderlichen Höhenlage einer anderen Nachführung realisiert ist.

8. Anlage bestehend aus mehrerer Einheiten nach einem der vorstehenden Ansprüche.

9. Anlage nach Anspruch 8, **dadurch gekennzeichnet, daß** die Nachführungen in Reihe derart gekoppelt sind, daß die Drehrichtungen der Solarmontierungen übereinstimmen.

10. Einheit oder Anlage nach einem der vorstehenden Ansprüche, **dadurch gekennzeichnet, daß** die Solarmontierungen durch Schwenkmotoren oder durch Zylinder bewegt werden.

## Claims

1. Unit comprised of two single-axis solar tracker with attached solar assemblies, and solar trackers move this solar assemblies in relation on the position of the sun; the two solar tracking devices are via a hydraulic or pneumatic force transmission (13, 14) coupled directly to each other in such way that, as one solar assembly (1) is moved in a direction corresponding with the position of the sun, the other solar assembly (1') performs also a motion in the direction corresponding with the position of the sun.

2. Unit of claim 1, wherein the actuators (2, 2') of both tracking devices perform relative to each other an exactly or approximately opposite linear motion.

3. Unit of claim 1, wherein the actuators of both tracking devices perform relative to each other an exactly or approximately equidirektional linear motion.

4. Unit of claim 2, wherein oppositely spiraled guides (16, 16') being provided for equidirectional rotation of the solar assemblies.

5. Unit of claim 3, wherein equidirektional spiraled guides being provided for equidirectional rotation of the solar assemblies.

6. Unit of one of claims 1, 2, 3, wherein the solar assemblies are rotated by means of bars (21, 21') und the bars of the two tracking devices each being attached in such a way that the rotation of the solar assemblies (1, 1') are equidirektional.

7. Unit of on of claims 1, 2, 4 or 6, wherein one tracking device there is a counterweight coordinated which, as the solar assembly (1) and/or parts of the tracking device with a variable altitude descends, stores energy for reuse in ascending, the counterweight being realized by the solar assembly (1') and/or parts of the tracking device with a variable altitude of another tracking device.

8. System of several tracking devices of one of the above claims.

9. System of claim 8, wherein the tracking devices are connected in series in such a way that rotation of the solar assemblies are equidirektional.

10. Unit or system according to one of the above claims, wherein the solar assemblies are being moved by swivel motors or by cylinders.

## Revendications

1. Unité composée de deux orienteurs solaires à un axe auxquels des montures solaires sont fixées, les orienteurs solaires faisant bouger ces montures solaires (1, 1') en fonction de la position du soleil, les deux orienteurs solaires étant directement attelés l'un à l'autre par l'intermédiaire d'une transmission de force hydraulique ou pneumatique (13, 14) de sorte que lorsqu'une monture solaire (1) est déplacée dans une direction correspondant à la position du soleil, l'autre monture solaire (1') exécute également un mouvement dans le sens correspondant à la position du soleil.

2. Unité conformément à la revendication 1, se caractérisant par le fait que des organes finaux (2, 2') des deux orienteurs exécutent un mouvement linéaire exactement ou presque en sens inverse l'un par rapport à l'autre.

3. Unité conformément à la revendication 1, se caractérisant par le fait que des organes finaux des deux orienteurs exécutent un mouvement linéaire exactement ou presque dans le même sens l'un par rapport à l'autre.

4. Unité conformément à la revendication 2, se caractérisant par le fait que des coulisses spiralées en sens inverse (16, 16') sont prévues pour assurer la rotation dans le même sens des montures solaires.

5. Unité conformément à la revendication 3, se caractérisant par le fait que des coulisses spiralées dans le même sens sont prévues pour assurer la rotation dans le même sens des montures solaires.

6. Unité conformément à l'une des revendications 1, 2 ou 3, se caractérisant par le fait que les montures solaires seront mises en rotation au moyen de barres (21, 21'), les barres des deux orienteurs étant attelées chacune de sorte que les sens de rotation des montures solaires (1, 1') concordent.

7. Unité conformément à l'une des revendications 1, 2, 4 ou 6, se caractérisant par le fait qu'un contrepoids est affecté à un orienteur, contrepoids qui lors de la descente de la monture solaire (1) et/ou des pièces de l'orienteur à niveau variable emmagasine de l'énergie qui pourra être réemployée lors de l'élévation, le contrepoids étant réalisé par la monture solaire (1') et/ou les pièces de l'orienteur à niveau variable d'un autre orienteur.

8. Installation composée de plusieurs unités selon l'une des revendications précédentes.

9. Installation conformément à la revendication 8, se caractérisant par le fait que les orienteurs sont attelés en série de sorte que les sens de rotation des montures solaires concordent.

10. Unité ou installation conformément à l'une des revendications précédentes, se caractérisant par le fait que les montures solaires sont mises en mouvement par des moteurs oscillants ou par des vérins.
